# EUROPÄISCHE PATENTSCHRIFT

(11) **EP 3 062 959 B1**
(45) Veröffentlichungstag und Bekanntmachung des Hinweises auf die Patenterteilung: **04.09.2019**
(21) Anmeldenummer: 14790516.0
(22) Anmeldetag: 28.10.2014
(51) Int. Cl.: B23Q 15/22, B23Q 17/22, G05B 19/401, B23Q 17/24, G05B 15/02, G05B 19/402

(54) **VERFAHREN UND VORRICHTUNG ZUR DETEKTION UND ZUR KORREKTUR EINER RÄUMLICHEN LAGE EINES IN EINER POSITIONIERUNGSEINRICHTUNG GEHALTENEN WERKSTÜCKS**
METHOD AND APPARATUS FOR DETECTING AND CORRECTING A SPATIAL POSITION OF A WORKPIECE HELD IN A POSITIONING DEVICE
PROCÉDÉ ET DISPOSITIF DE DÉTECTION ET DE CORRECTION D'UNE POSITION DANS L'ESPACE D'UNE PIÈCE MAINTENUE DANS UN SYSTÈME DE POSITIONNEMENT

(30) Priorität: 30.10.2013 DE 102013018654
(43) Veröffentlichungstag der Anmeldung: 07.09.2016
(73) Patentinhaber: JENOPTIK Automatisierungstechnik GmbH, 07745 Jena (DE)
(72) Erfinder: VOGT, Stefan, 07749 Jena (DE); DÖRING, Thomas, 07751 Sulza (DE); GEIPEL, Pierre, 07580 Braunichswalde (DE); MICHEL-TRILLER, Robert, 07745 Jena (DE)
(74) Vertreter: Waldauf, Alexander
(86) Internationale Anmeldenummer: PCT/EP2014/002895
(87) Internationale Veröffentlichungsnummer: WO 2015/062717

(56) Entgegenhaltungen:
- EP-A2- 0 545 655
- DE-A1-102009 026 484
- US-A- 4 942 611
- US-A- 5 274 566
- US-A- 5 672 092

## Beschreibung

Die Erfindung betrifft ein Verfahren und eine Vorrichtung zur Detektion und zur Korrektur einer räumlichen Lage eines in einer Positionierungseinrichtung gehaltenen Werkstücks.

Es sind verschiedene Verfahren zur Korrektur der Lage von zu bearbeitenden Werkstücken bekannt. Beispielsweise ist in der DE 101 39 081 A1 ein Verfahren zum Einstellen der Lage eines Werkzeugs durch eine Antriebsvorrichtung offenbart. Um eine Korrektur von Abweichungen zwischen einem Lagemomentanwert und einem Lageistwert eines Werkzeugs zu erreichen, die aufgrund erforderlicher Rechenzeiten einer Steuerungsvorrichtung und sonstiger verzögernd wirkender Vorgänge nicht tatsächlich mit einem angesteuerten Lagezielwert übereinstimmen, erfolgt das Einstellen der Lage des Werkzeugs ausschließlich durch Auswertung von Daten, die von einer Sensorvorrichtung bereitgestellt werden.

Die DE 10 2009 026 484 A1 betrifft eine Vorrichtung und ein Verfahren zum Bearbeiten von Werkstücken. Dabei liegt der Aufgabenstellung der DE 10 2009 026 484 A1 die Problematik zugrunde, dass insbesondere größere Vorrichtungen (Bearbeitungsvorrichtungen) wie Dreh- oder Fräsmaschinen erst eine bestimmte Betriebstemperatur erreichen müssen, damit die konstruktionsseitig vorgesehenen Zustellwege und Relativlagen genau stimmen. Dazu ist vorgesehen, mittels eines Sensors eine auftretende Differenz zwischen Soll- und Ist-Positionen zu erfassen. Der Sensor kann dabei an einer Haltevorrichtung oder an einem Bearbeitungskopf angeordnet sein. Der Ist-Abstand wird zwischen der Haltevorrichtung und dem Bearbeitungskopf erfasst und wird mit einem Soll-Abstand verglichen. In Abhängigkeit von einem gebildeten Differenzbetrag zwischen Soll- und Ist-Abstand ist nachfolgend eine Steuerung der Bearbeitung des Werkstücks möglich.

Die Offenbarung der DE 10 2011 006 447 A1 betrifft nun ein Verfahren zum Bearbeiten von baugleichen Werkstücken mittels einer Vorrichtung, bei der Werkzeuge zur Bearbeitung entlang von Ist-Werkzeugbahnen geführt werden. Diese Ist-Werkzeugbahnen beruhen auf bekannten Soll-Werkzeugbahnen, die wiederum erwartete Werkzeugbahnen darstellen. Während einer erfolgenden Bearbeitung des Werkstücks werden mittels eines Sensors laufend Abstandswerte zwischen der Soll-Werkzeugbahn und dem Werkstück gemessen. Anhand dieser Abstandswerte wird eine Ist-Werkzeugbahn des Werkzeugs ermittelt und deren Bahnabweichung zur Soll-Werkzeugbahn festgestellt. Die Bahnabweichung wird ermittelt und überprüft, ob diese innerhalb zulässiger Toleranzwerte liegt. Die Soll-Werkzeugbahn wird anhand der Abstandswerte korrigiert und gegebenenfalls für nachfolgend bearbeitete Werkstücke die korrigierte Soll-Werkzeugbahn als Grundlage der Steuerung des Werkzeugs verwendet. Grundsätzlich wird in einem Verfahren gemäß der DE 10 2011 006 447 A1 davon ausgegangen, dass sich das Werkstück an einer korrekten Position befindet und das Werkstück höchstens fertigungsbedingte Toleranzen aufweist. Eine tatsächliche räumliche Lage des Werkstücks wird nicht ermittelt.

Als nächstliegender Stand der Technik ist die bis dato unveröffentlichte Anmeldung DE 10 2012 109 245 der Anmelderin zu nennen, in der ein Verfahren und eine Vorrichtung zur Bearbeitung von nicht-rotationssymmetrischen Werkstücken mittels Laserstrahlung beschrieben ist. Die offenbarte Vorrichtung umfasst eine Zustelleinrichtung zur Zustellung der Werkstücke zu einer ersten Bearbeitungsposition und mit einer Bearbeitungseinrichtung aufweisend wenigstens einen Bearbeitungskopf zur Bearbeitung eines der ersten Bearbeitungsposition zugestellten Werkstücks. Die Zustelleinrichtung ist ein Greifroboter mit einer Greifvorrichtung. In seinem Zugriffsbereich ist eine Bereitstellungseinrichtung mit Halterungen angeordnet, deren Gestaltung und Dimensionierung so gewählt ist, dass wenigstens ein in den Halterungen gehaltenes Werkstück mit einer definierten räumlichen Ausrichtung und Position der Zustelleinrichtung zur Entnahme aus den Halterungen bereitgestellt ist. Es ist außerdem wenigstens eine Spanneinrichtung zur Aufnahme eines durch die Zustelleinrichtung zugestellten Werkstücks angeordnet, wobei durch jede Spanneinrichtung jeweils eine Bearbeitungsposition definiert ist. Spanneinrichtung und Zustelleinrichtung können auch als Positionierungseinrichtung angesehen werden, da durch das Zusammenwirken beider das Werkstück positioniert wird. Der Bearbeitungskopf ist jeder Bearbeitungsposition zur Bearbeitung des Werkstücks zustellbar.

Ebenso offenbart die Druckschrift US 5,274,566 ein Verfahren zur Detektion und zur Korrektur einer räumlichen Lage eines in einer Positionierungseinrichtung gehaltenen Werkstücks.

Die in der vorgenannten DE 10 2012 109 245 offenbarte Lösung sichert ab, dass die Werkstücke der Bearbeitungsvorrichtung theoretisch in exakter räumlicher Lage und Position zugestellt (positioniert) werden. Die Bearbeitungsvorrichtung startet die Bearbeitung mit vorab programmierten Konturen, welche der Laserstrahl auf dem Werkstück bearbeitet.

Voraussetzung für das Funktionieren dieser Lösung der DE 10 2012 109 245 ist das Vorliegen von Werkstücken innerhalb eines vorgegebenen Toleranzbereichs. Insbesondere für das Bearbeiten von gekrümmten Werkstücken ist es unabdingbar, dass diese in ihren geometrischen Abmessungen die vordefinierten Toleranzen nicht überschreiten. Die Werkstücke und der Bearbeitungskopf werden mit einer Toleranz von weniger als 0,1 mm den Bearbeitungspositionen zugestellt.

In der industriellen Praxis ist nicht abzusichern, dass die Toleranzbereiche der Werkstücke so gering gehalten werden können, dass die sehr geringen Toleranzwerte bei der Zustellung der Werkstücke und des Bearbeitungskopfs zu einer Bearbeitungsposition eingehalten werden. Fehlerquellen für Maßabweichungen sind vor allem die Krümmungsradien der Werkstücke. Solche Werkstücke werden oftmals durch Biegen eines Halbzeugs, beispielsweise eines Rohrs, hergestellt. Die dabei in dem Werkstück erzeugten Materialspannungen können, beispielsweise in Wechselwirkung mit Wirkungen der Umgebungstemperaturen auf das Material, zu einer unvorhersehbaren Verformung des Werkstücks führen. Schon geringe Abweichungen, beispielsweise in den Krümmungsradien, führen zu lokalen Lageverschiebungen des Werkstücks, welche das Bearbeitungsergebnis erheblich verschlechtern oder ganz verhindern. Ein weiteres Problem ist die Gefahr einer Kollision zwischen dem Bearbeitungskopf und dem Werkstück, wodurch die Bearbeitungsvorrichtung dejustiert oder gar zerstört werden kann.

Eine aufwendige Vermessung eines jeden Werkstücks würde jedoch den Produktionsablauf erheblich verlangsamen. Es wird daher nach einer Lösung gesucht, welche eine Kollision verhindert, die Qualität der Bearbeitung verbessert und in den Bearbeitungsprozess integriert werden kann. Weiterhin soll im Nachhinein kontrolliert werden, ob der Bearbeitungsprozess erfolgreich abgeschlossen wurde.

Der Erfindung liegt daher die Aufgabe zugrunde eine weitere Möglichkeit vorzuschlagen, mittels der eine räumliche Lage eines in einer Positionierungseinrichtung gehaltenen und positionierten Werkstücks festgestellt und bei Bedarf korrigiert werden kann.

Die Aufgabe wird in einem Verfahren zur Detektion und zur Korrektur einer räumlichen Lage eines in einer Positionierungseinrichtung gehaltenen Werkstücks gelöst, das die folgenden Schritte A bis G aufweist:
A: Positionieren des Werkstücks in der Positionierungseinrichtung,
B: Zustellen eines Bearbeitungskopfes aufweisend mindestens einen Sensor zur Abstandsmessung und Positionserfassungsmittel zur Erfassung der aktuellen Position des Bearbeitungskopfes zu mindestens einer Messposition,
C: berührungsfreies Erfassen einer Ist-Position jeweils mindestens eines Messpunktes des positionierten Werkstücks an mindestens zwei Messpositionen unter Verwendung des Bearbeitungskopfes, wobei die mindestens zwei Messpunkte auf einer virtuellen Messachse liegen, die auf einer Oberfläche des Werkstücks verläuft, und aus den erfassten Ist-Positionen eine Winkellage der virtuellen Messachse bezüglich einer virtuellen Referenzachse ermittelt wird,
D: Vergleichen der erfassten Ist-Position mit einer erwarteten Soll-Position und Feststellen von Abweichungswerten zwischen der Ist-Position und der Soll-Position,
E: Vergleichen der festgestellten Abweichungswerte mit einem zulässigen Toleranzwert, wobei die festgestellten Abweichungen die Abweichungen der Abstandswerte zwischen der Ist-Position und der Soll-Position und die Winkellage sind,
F: Zustellen des Bearbeitungskopfs zu einer Kontur, entlang der das Werkstück durch den Bearbeitungskopf zu bearbeiten ist dann, wenn die festgestellte Abweichung innerhalb des zulässigen Toleranzwertes liegt, oder
G: Ausrichten von Bearbeitungskopf und Werkstück zueinander und zu der einen Kontur derart, dass eine Abweichung der Ist-Position nach dem Ausrichten innerhalb der zulässigen Toleranzwerte liegt.

Kern der Erfindung ist es, bereits vor Beginn einer Bearbeitung des Werkstücks eine räumliche Lage des Werkstücks zu erfassen. Die Kenntnis einer für ein jeweiliges Werkstück individuellen räumlichen, als dreidimensionalen, Lage erlaubt beispielsweise einen effizienteren Ablauf der Bearbeitungsprozesse, da eine Bahn, entlang welcher der Bearbeitungskopf während des Bearbeitungsprozesses zu bewegen ist, bereits vorausberechnet werden kann und die Anzahl von Kontrollmessungen reduziert werden kann.

Als Werkstücke werden in dieser Beschreibung allgemein zu bearbeitende Materialien, z. B. Rohmaterialien wie Bleche, Rohre oder Profile, sowie Halbzeuge und fertiggestellte Produkte verstanden.

Eine Messposition ist eine räumliche Lage des Bearbeitungskopfs, von der aus ein Werkstück erfasst werden kann. Die Messposition ist erreicht, wenn der Bearbeitungskopf höchstens soweit von dem Werkstück entfernt ist, dass ein Abstand zwischen dem Bearbeitungskopf und dem Werkstück im Rahmen der sensorbedingten Toleranzen erfasst werden kann.

Mittel zur Erfassung der räumlichen Lage (Positionserfassungsmittel) sind beispielsweise Sensoren, durch die eine momentane Ausrichtung des Bearbeitungskopfs erfasst wird. So können die durchgeführten und gespeicherten Zustellbewegungen des Bearbeitungskopfes dazu dienen, eine aktuelle räumliche Lage (aktuelle Position) des Bearbeitungskopfes zu ermitteln. Eine räumliche Lage kann auch durch Sensoren erfasst werden, durch die eine relative Lage des Bearbeitungskopfes zu dem Sensor oder den Sensoren erfasst bzw. berechnet wird.

Das Werkstück wird entlang der Kontur vorzugsweise durch Materialabtrag, z. B. durch Ablation, Schneiden, Fräsen oder Bohren, durch Materialveränderung, wie z. B. durch Härten oder andere Veränderungen der Gefügestruktur oder durch Bewirken einer Rekristallisation des Materials des Werkstücks oder durch Schweißen oder Kleben bearbeitet. Zur Bearbeitung können mechanisch wirkende Bearbeitungsmittel wie Fräser, Bohrer, Sägen oder Schleifmittel verwendet werden. Vorzugsweise wird eine Bearbeitung aber mittels energiereicher elektromagnetischer Strahlung, vorzugsweise mittels Laserstrahlung durchgeführt. Die Kontur kann in einem einfachen Fall in einer Ebene (Bearbeitungsebene) liegen, entlang der das Werkstück oder ein Teil des Werkstücks bearbeitet, z. B. abgeschnitten wird. Dabei wird beispielsweise der Bearbeitungskopf in einer Ebene um das Werkstück geführt und dieses entlang einer von dem Bearbeitungskopf überstrichenen Linie abgetrennt. Die Kontur kann auch komplex gestaltet sein und beispielsweise Auslassungen aufweisen sowie Bögen oder andere Formen beinhalten. Beispielsweise kann eine Bearbeitung eines in einer Positionierungseinrichtung gehaltenen Werkstücks entlang von Bearbeitungslinien (Kontur) des Werkstücks erfolgen.

Als berührungsfreie Messverfahren können vorzugsweise kapazitive, optische sowie induktive Verfahren verwendet werden. Mittels dieser Messverfahren und durch gezielte Verarbeitung des Messsignals wird der Abstand zwischen der Werkstückoberfläche und dem Bearbeitungskopf gemessen. Es wird hier vereinfachend von einem Abstand des Bearbeitungskopfs zum Werkstück gesprochen, obwohl natürlich ein Abstand zwischen einem Sensor des Bearbeitungskopfs und dem Werkstück erfasst wird. Aufgrund der Messergebnisse ist eine nachfolgende Regelung des Abstands zwischen dem Werkstück und dem Bearbeitungskopf ermöglicht. Einem für die Durchführung eines Messverfahrens verwendeten Sensor ist jeweils eine sensorspezifische Messstrecke zugeordnet. Messungen über Distanzen innerhalb der Messstrecke ergeben zuverlässige Messwerte. Ist beispielsweise ein Sensor für Abstandsmessungen über Distanzen bis maximal 20 mm ausgelegt, beträgt dessen Messstrecke 20 mm.

Ein Ausrichten von Bearbeitungskopf und Werkstück zueinander und zu der Kontur kann durch eine gesteuerte Lageänderung des Bearbeitungskopfs erfolgen.

Das Ausrichten von Bearbeitungskopf und Werkstück zueinander und zu der mindestens einen Kontur kann in einer weiteren Ausgestaltung des erfindungsgemäßen Verfahrens auch durch eine gesteuerte Lageänderung des Werkstücks erfolgen. Die notwendige Abstandskorrektur zwischen Bearbeitungskopf und Werkstück (Ausrichten) kann selbstverständlich auch über eine Positionsänderung der Positionierungseinrichtung umgesetzt werden. Dabei verbleibt der Bearbeitungskopf in seiner vorprogrammierten Position und das Werkstück wird mittels der Positionierungseinrichtung in die exakte Lage zum Bearbeitungskopf gebracht.

Es ist ferner möglich, dass das Ausrichten von Bearbeitungskopf und Werkstück zueinander und zu der Kontur durch eine gesteuerte Lageänderung des Bearbeitungskopfs und des Werkstücks erfolgt.

In dem erfindungsgemäßen Verfahren erfolgt ein berührungsfreies Erfassen einer Ist-Position von mindestens zwei Messpositionen aus an jeweils mindestens einem Messpunkt des positionierten Werkstücks. Das bedeutet, die Schritte C und D werden mindestens einmal an jeweils einer anderen Messposition durchgeführt. Die in Schritt E festgestellten Abweichungen sind Abweichungen der Abstandswerte sowie zusätzlich aus den Abstandswerten abgeleitete Werte, wie z. B. eine Winkellage einer gedachten und zwischen den beiden Messpunkten verlaufenden virtuellen Messachse.

Durch eine solche Vorgehensweise wird aus den beiden Abstandswerten an den beiden Messpositionen und unter Kenntnis der Messpositionen die Winkellage des Werkstücks abgeleitet. Eine solche Ermittlung der Winkellage des Werkstücks ist an mehreren Oberflächen möglich, sodass die Lage des Werkstücks im Raum (räumliche Lage) mindestens für die zur Ermittlung der Winkellage herangezogenen Bereiche des Werkstücks abgeleitet werden kann.

Dazu ist es günstig, dass die mindestens zwei Messpunkte auf einer gedachten Messachse liegen, die auf einer Oberfläche des Werkstücks verläuft und aus den erfassten Ist-Positionen eine Winkellage der Messachse bezüglich einer virtuellen Referenzachse ermittelt wird. Eine solche Referenzachse kann beispielsweise eine erwartete Längsachse des Werkstücks sein. Auch ist es möglich, dass eine Referenzachse eine virtuelle Achse in einem Koordinatensystem ist, das für die Bestimmung der räumlichen Lage des Bearbeitungskopfes und / oder des Werkstücks verwendet wird.

Um eine Kollision des Bearbeitungskopfes mit dem Werkstück zu vermeiden, kann das erfindungsgemäße Verfahren so ausgestaltet sein, dass der Bearbeitungskopf schrittweise einer Zustellposition, die als Messposition dient, zugestellt wird, indem der Bearbeitungskopf einer Reihe aufeinanderfolgender Zustellpositionen zugestellt wird, an jeder Zustellposition durch eine Abstandsmessung das Vorhandensein des Werkstücks innerhalb einer Messstrecke untersucht wird und bei einem Nichtvorhandensein des Werkstücks der Bearbeitungskopf einer nächsten Zustellposition zugestellt wird, wobei die nächste Zustellposition in einer geringeren Entfernung von einer vorhergehenden Zustellposition gewählt ist, als die Messstrecke der Abstandsmessung beträgt. Es soll als eine Sequenz von Zustellpositionen angefahren werden. Diese sind nicht weiter als die Länge der Messstrecke voneinander entfernt. Dadurch wird vermieden, dass der Bearbeitungskopf an einer Zustellposition kein Vorhandensein eines Werkstücks erfasst, aber es bei der Zustellung des Bearbeitungskopfes an die nächste Zustellposition zur Kollision mit dem Werkstück kommt, das hinter der Messstrecke vorhanden ist.

Durch das erfindungsgemäße Verfahren sind zwei prinzipielle Vorgehensweisen ermöglicht.

Die erste Vorgehensweise ist die Durchführung mindestens einer Messung vor Beginn des Laserbearbeitungsprozesses. Vor dem Beginn des eigentlichen Bearbeitungsprozesses, der vorzugsweise eine Bearbeitung des Werkstücks mittels Laserstrahlung ist, wird der Bearbeitungskopf dem Werkstück an die Messposition angenähert, die in einer Steuerung hinterlegt ist. Es wird erwartet, dass das Werkstück in einer solchen räumlichen Lage positioniert ist, dass eine Abstandsmessung durch den an der Messposition befindlichen Bearbeitungskopf unter Einhaltung der Messstrecke möglich ist.

Durch mindestens einen Sensor einer Abstandssensorik des Bearbeitungskopfes wird an der Messposition der Abstand des Bearbeitungskopfs zu einem Punkt auf der Werkstückoberfläche erfasst. Liegt dieser erfasste Abstand außerhalb der vorgegebenen Toleranz, wird der Bearbeitungskopf, beispielsweise über eine Zustellbewegung entlang der z-Achse, zum Werkstück hin bewegt oder von diesem entfernt. Damit steht der Bearbeitungskopf in einer relativ zum Werkstück vorgesehenen Ausgangslage. Anschließend kann der Prozess gestartet und z. B. eine programmierte Kontur mittels Laserstrahlung bearbeitet werden.

Der Prozess der Annäherung und der Abstandsvermessung kann einmalig aber auch mehrmalig aus unterschiedlichen Richtungen durchgeführt werden. Ein mehrmaliges Vermessen erhöht die Zuverlässigkeit der Messung und der Regelung.

Bei einer festgestellten größeren Abweichung von Ist- und Soll-Position kann neben einer seitlichen Verschiebung des Werkstücks zusätzlich auch eine Schieflage des Werkstücks im Bereich der Bearbeitungsebene vorliegen. Würde diese Schieflage, d. h. eine nicht tolerierbare Winkelabweichung der räumlichen Lage des Werkstücks, nicht korrigiert werden und das Werkstück entlang der ursprünglich vorgesehenen Bearbeitungsebene bearbeitet werden, so würde das Werkstück lediglich in schlechter Qualität oder als Ausschuss gefertigt werden. Es würde zu einem nicht gewünschten Winkel, beispielsweise in einer Schnittkontur, kommen. Dies kann durch Abstandsmessungen an weiteren Messpositionen jeweils zu Messpunkten entlang des Werkstücks in verschiedenen Richtungen erkannt werden.

Zur Vermeidung einer Kollision des Bearbeitungskopfes und des Werkstücks kann der Bearbeitungskopf in einer Suchfahrt schrittweise der Soll-Position angenähert werden. Unterschreitet der gemessene Abstand einen vordefinierten Wert, d. h. bei drohender Kollision, wird entweder der gesamte Bearbeitungsprozess oder, in einer weiteren Ausgestaltung des erfindungsgemäßen Verfahrens, nur die Zustellung des Bearbeitungskopfes per Suchfahrt gestoppt.

Es ist ebenfalls möglich, zur Korrektur die in einer Steuerung hinterlegte Kontur mit einer im Koordinatensystem einer Steuerung abgelegten, zu bearbeitenden Kontur abzugleichen. Dabei werden die beiden genannten Konturen durch Verschieben der Konturen bzw. von mindestens einem Frame, das einer der Konturen zugeordnet ist, in die entsprechende Richtung korrigiert. Ein Frame ist durch eine Anzahl von Koordinaten des Koordinatensystems gegeben.

Wird in einer weiteren Ausgestaltung des Verfahrens an einer weiteren, um 90° versetzten Messposition ein weiterer Messpunkt erfasst, kann eine Korrektur auch in einer zweiten Richtung erfolgen.

Ferner ist in einer zweiten Vorgehensweise eine Kontrolle nach dem Bearbeitungsprozess möglich. Die im Bearbeitungskopf integrierte Abstandssensorik kann auch genutzt werden, um eine Kontrolle zum Bearbeitungsergebnis durchzuführen. Beispielhaft erläutert wird dies mit dem Abtrennen von Abschnitten eines Rohres als (Ausgangs-)Werkstück. Ein nicht komplett abgetrennter Abschnitt verbleibt in undefinierter Lage am Werkstück. In der weiteren Verarbeitung kann dieser verbliebene Abschnitt den Produktionsablauf stören oder schwerwiegende Schäden verursachen. Es ist deshalb anzustreben, nach abgeschlossenem Bearbeitungsprozess zu kontrollieren, dass sich keine unvollständig abgetrennten Abschnitte mehr am Werkstück befinden.

Der Bearbeitungskopf wird von der letzten Position, an der eine Bearbeitung des Werkstücks durch den Bearbeitungskopf erfolgte, in Richtung des abgetrennten Abschnitts bewegt und mittels der Abstandssensorik wird das Vorhandensein von Material kontrolliert. Bei einer Negativmessung, wenn also kein Material festgestellt wurde, kann die Messung nochmals wiederholt werden, nachdem der Bearbeitungskopf der bearbeiteten Kontur weiter zugestellt wird. Damit wird sichergestellt, dass auch nicht vollständig abgetrennte und in unbekannter Lage am Werkstück verbliebene Abschnitte detektiert werden können. Die Nachstellung des Bearbeitungskopfes entsprechend vorliegender Messergebnisse erfolgt vorzugsweise mit der z-Achse des Bearbeitungskopfes.

Um den Erfolg einer Bearbeitung zu überprüfen, können nach erfolgter Bearbeitung des Werkstücks durch den Bearbeitungskopf erneut die Schritte B, C, D und E durchgeführt werden.

Beide Vorgehensweisen können natürlich auch miteinander kombiniert sein und nacheinander durchgeführt werden.

Das erfindungsgemäße Verfahren kann in einer weiterführenden Ausgestaltung derart erweitert sein, dass neben einem ersten Werkstück in einer ersten Positionierungseinrichtung mindestens ein zweites Werkstück in einer zweiten Positionierungseinrichtung positioniert wird. Nachdem die Schritte C bis E des erfindungsgemäßen Verfahrens für das erste Werkstück durchgeführt wurden, werden die Schritte C bis E für das zweite Werkstück durchgeführt. Befinden sich das erste und das zweite Werkstück jeweils in einer solchen räumlichen Lage, dass der jeweils zulässige Toleranzwert eingehalten ist, wird mit Schritt F fortgefahren. Wird in Schritt E festgestellt, dass die festgestellten Abweichungswerte mindestens eines der beiden Werkstücke außerhalb der zulässigen Toleranzwerte liegt, wird der Schritt G für das betreffende Werkstück, bzw. für beide Werkstücke, durchgeführt. Erst wenn das erste und das zweite Werkstück so ausgerichtet sind, dass die Abweichungen beider innerhalb der zulässigen Toleranzwerte liegen, wird der Bearbeitungskopf der Kontur zugestellt.

In weiteren Ausgestaltungen des erfindungsgemäßen Verfahrens ist es möglich, dass ein drittes oder gar ein viertes Werkstück in einer dritten beziehungsweise vierten Positionierungseinrichtung positioniert werden und die Schritte C bis E wie vorstehend beschrieben durchgeführt werden.

Das erfindungsgemäße Verfahren kann besonders vorteilhaft beim Betrieb einer Vorrichtung zur Bearbeitung von nicht-rotationssymmetrischen Werkstücken mittels Laserstrahlung verwendet werden, da es bei der Verwendung von Laserstrahlung auf eine hohe Präzision bei der relativen Positionierung von Bearbeitungskopf, Werkstück und Kontur ankommt.

Das Verfahren kann außerdem in einer Vorrichtung zur Detektion und zur Korrektur einer räumlichen Lage eines in einer Positionierungseinrichtung positionierten Werkstücks mittels eines Bearbeitungskopfs verwendet werden.

Die Aufgabe wird ferner durch eine Vorrichtung zur Detektion und zur Korrektur einer räumlichen Lage eines in einer Positionierungseinrichtung gehaltenen Werkstücks mittels eines Bearbeitungskopfes gelöst. Eine erfindungsgemäße Vorrichtung weist mindestens eine Positionierungseinrichtung zur Positionierung eines Werkstücks, mindestens einen Bearbeitungskopf aufweisend mindestens einen Abstandssensor und Mittel zur Erfassung der Position des Bearbeitungskopfes sowie eine Steuerung zur gesteuerten Lageänderung des Bearbeitungskopfes und / oder des Werkstücks auf, wobei die Steuerung so konfiguriert ist, dass die folgenden Schritte durch Wirkung der Steuerung erfolgen:
a. Zustellen des Bearbeitungskopfes zu mindestens einer Messposition,
b. berührungsfreies Erfassen einer Ist-Position eines Messpunktes des positionierten Werkstücks an mindestens zwei Messpositionen unter Verwendung des Bearbeitungskopfes, wobei die mindestens zwei Messpunkte auf einer virtuellen Messachse liegen, die auf einer Oberfläche des Werkstücks verläuft, und aus den erfassten Ist-Positionen eine Winkellage der virtuellen Messachse bezüglich einer virtuellen Referenzachse ermittelt wird,
c. Vergleichen der erfassten Ist-Position mit einer erwarteten Soll-Position und Feststellen von Abweichungswerten zwischen der Ist-Position und der Soll-Position,
d. Vergleichen der festgestellten Abweichungswerte mit einem zulässigen Toleranzwert, wobei die festgestellten Abweichungen die Abweichungen der Abstandswerte zwischen der Ist-Position und der Soll-Position und die Winkellage sind,
e. Zustellen des Bearbeitungskopfs zu (mindestens) einer Bearbeitungsebene, entlang der das Werkstück durch den Bearbeitungskopf zu bearbeiten ist, dann, wenn die festgestellte Abweichung innerhalb des zulässigen Toleranzwertes liegt, oder
f. Ausrichten von Bearbeitungskopf und Werkstück zueinander und zu der (mindestens) einen Bearbeitungsebene derart, dass eine Abweichung der Ist-Position nach dem Ausrichten innerhalb der zulässigen Toleranzwerte liegt.

Der Bearbeitungskopf ist mit einer Abstandssensorik ausgestattet. Diese umfasst wenigstens einen Sensor, der zur Abstandsmessung vorzugsweise nach einem kapazitiven oder induktiven Messprinzip geeignet ist. Die Abstandsmessung erfolgt über eine sensorspezifische Messstrecke. Mittels dieser kapazitiven bzw. induktiven Abstandssensorik und durch gezielte Verarbeitung des Sensorsignals ist der Abstand zwischen der Werkstückoberfläche und dem Bearbeitungskopf messbar. Durch Weiterleiten der Sensorsignale an eine zur Auswertung der Sensorsignale ausgelegte Steuerung können die räumlichen Lagen von Werkstück und Bearbeitungskopf zueinander geregelt werden. Die Nachstellung des Bearbeitungskopfes entsprechend vorliegender Messergebnisse erfolgt vorzugsweise mit der z-Achse des Bearbeitungskopfes.

Der Bearbeitungskopf enthält Bearbeitungsmittel zur Bearbeitung des mindestens einen Werkstücks. Die Bearbeitungsmittel können mechanisch wirkende Mittel, wie beispielsweise Fräser, Meißel, Sägen, Bohrer, Schaber oder Hobel, sein. Diese können gegeneinander auswechselbar sein. Bevorzugt ist, dass das Bearbeitungsmittel eine energiereiche elektromagnetische Strahlung, vorzugsweise eine Laserstrahlung, ist.

Der Bearbeitungskopf steht vorzugsweise mit einer Laserquelle der Bearbeitungseinrichtung in Verbindung und weist Einrichtungen zur Strahlführung und Strahlformung auf. Er ist über Motoren und eine Steuerung gesteuert bewegbar. In weiteren Ausführungen der erfindungsgemäßen Vorrichtung kann der Bearbeitungskopf um bis zu sechs Freiheitsgrade, nämlich entlang der x-, y- und z-Achsen eines kartesischen Koordinatensystems beweglich sowie um die genannten Achsen drehbar sein. Der Bearbeitungskopf kann also dreh- und schwenkbar sein.

Eine Positionierungseinrichtung kann jede Einrichtung sein, die zum Halten eines Werkstücks geeignet ist. Spanneinrichtungen können beispielsweise Spannfutter, konische Aufnahmen oder sonstige kraft- und / oder formschlüssige Einrichtungen zum Halten von Werkstücken sein. Es können in weiteren Ausführungen der erfindungsgemäßen Vorrichtung mehrere Positionierungseinrichtungen angeordnet sein. Eine oder mehrere Positionierungseinrichtungen können rotierbar sein, d. h. ein eingespanntes Werkstück ist um mindestens eine Achse der Positionierungseinrichtung rotierbar.

Vorzugsweise ist eine Steuerung vorhanden, durch die mindestens die Positionierungseinrichtung und der Bearbeitungskopf ansteuerbar sind. Es ist günstig, wenn Betriebszustände von Positionierungseinrichtung und Bearbeitungskopf gegeneinander abgeglichen werden, um auch über längere Zeiträume der Verfahrensdurchführung eine gleichbleibend hohe Präzision aller Bewegungen und Verfahrensschritte zu gewährleisten.

Die Erfindung wird nachfolgend anhand von Ausführungsbeispielen und Abbildungen näher erläutert. Es zeigen:
Fig. 1 einen Bearbeitungskopf an einer Messposition und ein Werkstück an einer Soll-Position,
Fig. 2 einen Bearbeitungskopf an einer Messposition und ein Werkstück abseits der Soll-Position,
Fig. 3 ein erstes Ausführungsbeispiel einer Abstandsmessung an mehreren Messpositionen entlang einer Messachse,
Fig. 4 ein erstes Ausführungsbeispiel einer erfindungsgemäßen Vorrichtung bei einer Abstandsmessung nach einer Zustellung des Bearbeitungskopfes zur Messposition entlang einer Anzahl von Zustellpositionen und
Fig. 5 ein erstes Ausführungsbeispiel einer erfindungsgemäßen Vorrichtung mit zwei Positionierungseinrichtungen.

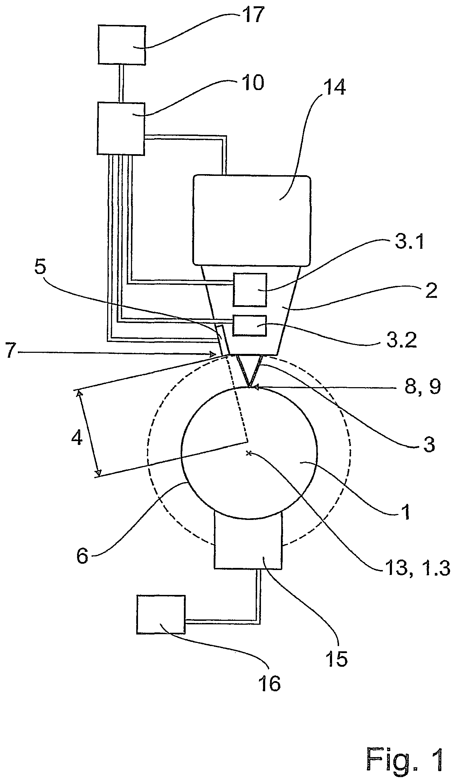

In Fig. 1 ist stark schematisiert ein Bearbeitungskopf 2 gezeigt, der einer Messposition 7 zugestellt ist. Der Bearbeitungskopf 2 weist einen Sensor 5 auf, der Bestandteil einer Abstandssensorik ist. Der Sensor 5 ist dazu ausgelegt, Abstandsmessungen nach einem kapazitiven Messprinzip zu erlauben. Die Abstandsmessungen können dabei zuverlässig über die Messstrecke 4 (als Strichlinie dargestellt) erfolgen. Die Messstrecke 4 ist größer als ein Abstand zwischen dem Bearbeitungskopf 2 und der Oberfläche eines zu bearbeitenden Werkstücks 1. Das Werkstück 1 ist in einer Positionierungseinrichtung 15 positioniert, die mit einem Antrieb 16 in Verbindung steht und nimmt eine solche räumliche Lage ein, dass es an einer Ist-Position 8 vorhanden ist, die einer Soll-Position 9 des Werkstücks 1 entspricht. Durch den Bearbeitungskopf 2 ist mittels einer Strahlungsquelle 3.1 und einer strahlformenden Optik 3.2 ein fokussierter Laserstrahl als ein Bearbeitungsmittel 3 erzeugbar und auf das Werkstück 1 gerichtet. Mittels des Bearbeitungsmittels 3 ist eine Bearbeitung des Werkstücks 1 an einer Kontur 6 möglich. Werden der Bearbeitungskopf 2 und das Werkstück 1 relativ zueinander bewegt, kann eine Bearbeitung mittels des Bearbeitungsmittels 3 entlang der Kontur 6 erfolgen. Wird der Bearbeitungskopf 2 in Pfeilrichtung um das Werkstück 1 geführt, erfolgt eine Bearbeitung, hier ein Trennen des Werkstücks 1 entlang der Kontur 6. Die Vorrichtung beinhaltet Mittel zur Erfassung der aktuellen Position des Bearbeitungskopfes 2 (Positionserfassungsmittel 17), durch die eine räumliche Lage und Position des Bearbeitungskopfes 2 bekannt sind und der Steuerung 10 zur Verfügung gestellt sind.

Eine Längsachse 1.3 des Werkstücks 1 fällt mit einer virtuellen Referenzachse 13 zusammen. Der Sensor 5 ist mit einer Steuerung 10 verbunden, die ihrerseits wieder signaltechnisch mit einem Antrieb 14 des Bearbeitungskopfes 2 verbunden ist. Die Bewegungen des Bearbeitungskopfes 2 werden durch den Antrieb 14 bewirkt. Die Strahlungsquelle 3.1 und die strahlformende Optik 3.2 werden durch die Steuerung 10 angesteuert, wodurch die Bereitstellung des Laserstrahls und dessen Fokussierung gesteuert beeinflusst werden. Durch die Steuerung 10 wird ebenfalls der Antrieb 16 der Positionierungseinrichtung 15 angesteuert.

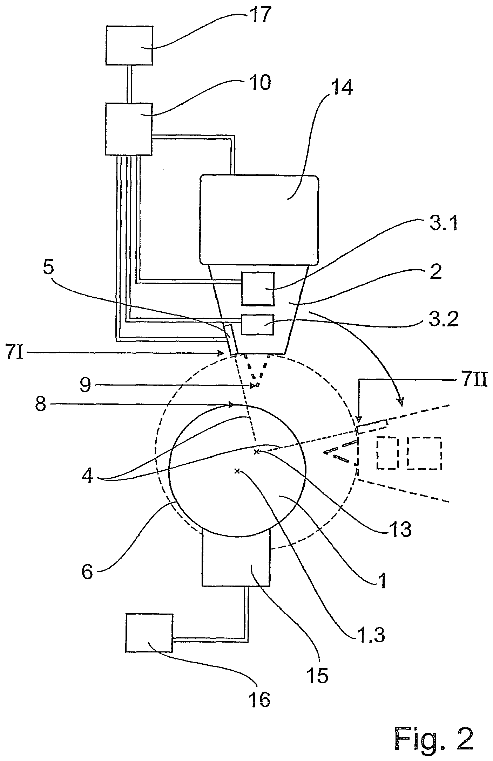

Fig. 2 zeigt eine ähnliche Konstellation wie Fig. 1, allerdings befindet sich das Werkstück 1 an einer Ist-Position 8, die von der Soll-Position 9 derart abweicht, dass die Abweichung größer als ein zulässiger Toleranzwert ist. Der Bearbeitungskopf 2 ist der ersten Messposition 7I zugestellt. Mittels des Sensors 5 wird eine Abstandsmessung entlang der Messstrecke 4 durchgeführt und festgestellt, dass an der Soll-Position 9 kein Werkstück 1 vorhanden ist. Zugleich wird der Abstand (Abstandswert) des einen Werkstücks 1 von dem Sensor 5 entlang der Messstrecke 4 (vereinfachend auf einen Punkt der Oberfläche des Werkstücks 1 bezogen) gemessen und an die Steuerung 10 geleitet. Durch die Steuerung 10 wird der Antrieb 14 angesteuert und der Bearbeitungskopf 2 entlang des Umfangs des Werkstücks 1 um 90° zu einer zweiten Messposition 7II geschwenkt (Bearbeitungskopf 2 gestrichelt gezeigt). Die Strahlungsquelle 3.1 ist durch die Steuerung 10 abgeschaltet. Die Lage des Bearbeitungskopfes 2 an der zweiten Messposition 7II ist durch das Positionserfassungsmittel 17 bekannt und steht der Steuerung 10 zur Verfügung.

An der zweiten Messposition 7II erfolgen eine weitere Abstandsmessung und Erfassung des Abstands zwischen Sensor 5 und Werkstück 1. Auch diese Ergebnisse der Abstandsmessung werden an die Steuerung 10 gesendet. Aus den bekannten Positionen der ersten Messposition 7I und der zweiten Messposition 7II sowie den zugehörigen Abstandswerten aus den Abstandsmessungen ist die räumliche Lage des Werkstücks 1 im Bereich der ersten Messposition 7I und der zweiten Messposition 7II ermittelbar. Die ermittelte räumliche Lage des Werkstücks 1 und die Kenntnis der Abmaße und Form der Werkstücks 1 erlauben den Vergleich der räumlichen Lage der Längsachse 1.3 zur bekannten räumlichen Lage einer virtuellen Referenzachse 13. Diese virtuelle Referenzachse 13 entspricht der erwarteten räumlichen Lage der Längsachse 1.3. Die sich aus dem Vergleich ergebenden Abweichungen der räumlichen Lagen von Längsachse 1.3 und Referenzachse 13 werden als Stellparameter zur Korrektur der räumlichen Lage des Werkstücks 1 verwendet. Dazu wird durch die Steuerung 10 der Antrieb 16 so angesteuert, dass das Werkstück 1 an seine Soll-Position 9 verschoben wird. Nach dieser Korrektur erfolgt eine erneute Abstandsmessung. Liegt der hier ermittelte Abstandswert innerhalb der zulässigen Toleranz, werden durch die Steuerung 10 die Strahlungsquelle 3.1, die strahlformende Optik 3.2 und der Antrieb 14 angesteuert und das Werkstück 1 durch den Laserstrahl als Bearbeitungsmittel 3 entlang der Kontur 6 bearbeitet.

In einer Abwandlung des erfindungsgemäßen Verfahrens werden nicht die räumlichen Lagen von Längsachse 1.3 und Referenzachse 13 miteinander verglichen, sondern es werden die räumlichen Positionen der angemessenen Messpunkte verwendet, um die erforderlichen Steuerbefehle für die Korrektur zu erzeugen.

Eine weitere Ausgestaltung des Verfahrens besteht darin, dass das Werkstück 1 in seiner erfasstem räumlichen Lage verbleibt und ein virtuelles räumliches Koordinatensystem (nicht gezeigt) der Steuerung 10 so verschoben wird, dass die Soll-Position 9 mit der ermittelten Ist-Position 8 innerhalb der zulässigen Toleranzwerte zu liegen kommt. Durch die Steuerung 10 wird dann der Antrieb 14 so angesteuert, dass der Bearbeitungskopf 2 an einer Messposition 7 (nicht gezeigt) so zu dem Werkstück 1 ausgerichtet wird, dass dann die zulässigen Toleranzwerte zwischen Ist-Position 8 und Soll-Position 9 eingehalten werden.

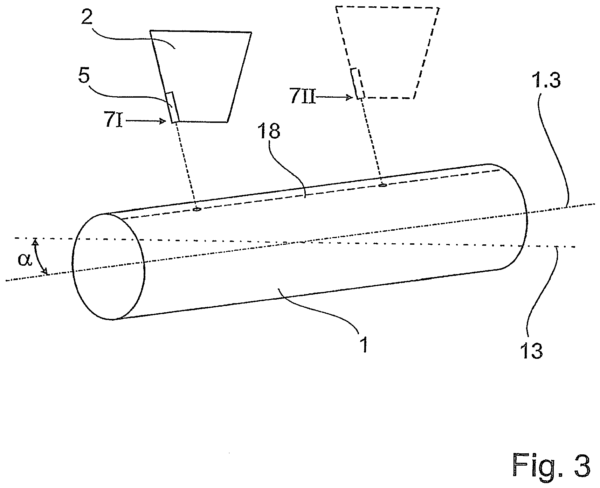

Das Vorgehen bei der Feststellung von Schieflagen eines rohrförmigen Werkstücks 1 mit rundem Querschnitt ist in Fig. 3 gezeigt. Um eine Winkellage zwischen der Längsachse 1.3 und der Referenzachse 13 zu ermitteln, wird, wie oben geschildert, an einer ersten Messposition 7I eine Abstandsmessung zwischen dem Bearbeitungskopf 2 und einem Punkt der Oberfläche des Werkstücks 1 durchgeführt. Anschließend wird der Bearbeitungskopf 2 eine bestimmte Strecke entlang einer virtuellen Messachse 18 des Werkstücks 1 verfahren und an einer zweiten Messposition 7II wird eine zweite Abstandsmessung durchgeführt. Die virtuelle Messachse 18 verläuft in Längsrichtung des Werkstücks 1 entlang einer (isoklinen) Kammlinie der Wölbung des Werkstücks 1. Aus der Kenntnis der beiden Messpositionen 7I und 7II sowie der jeweils erfassten Abstandswerte kann eine Winkellage des Werkstücks 1 bezüglich der Referenzachse 13 ermittelt werden. Um sicherzugehen, dass an den beiden Messpositionen 7I und 7II jeweils Abstandswerte von Punkten auf der Kammlinie für die Ermittlung der Winkellage verwendet werden, können an den beiden Messpositionen 7I und 7II mehrfach Abstandsmessungen durchgeführt werden, wobei die dabei verwendeten Messpositionen 7 orthogonal zur Längsachse 1.3 variiert werden. Es wird diejenige Messposition 7 mit dem geringsten Abstandswert ausgewählt.

In einer weiteren Ausgestaltung kann auf das grundsätzliche Vorliegen einer unerwünschten Winkellage geschlossen werden, wenn die Abstandsmessungen an den beiden Messpositionen 7I und 7II Abstandswerte ergeben, die bei einer erwünschten Winkellage nicht zu erwarten sind.

Es können auch Abstandsmessungen an mehreren Messpositionen 7I bis 7n (nur 7I und 7II gezeigt) erfolgen. Ergeben die dabei erhobenen Abstandswerte Punkte einer Kurve statt einer Geraden, kann auf das Vorliegen einer unerwünschten Winkellage geschlossen werden.

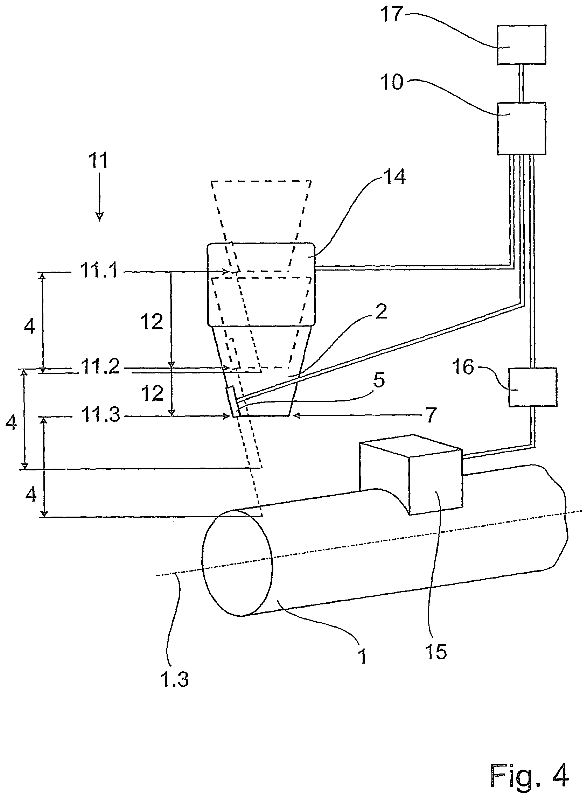

Ein erstes Ausführungsbeispiel einer erfindungsgemäßen Vorrichtung bei einer Abstandsmessung nach einer Zustellung des Bearbeitungskopfes 2 zur Messposition 7 entlang einer Anzahl von Zustellpositionen 11 wird in Fig. 4 vereinfacht dargestellt. In einem ersten Schritt wird der Bearbeitungskopf 2 durch die Steuerung 10 und den Antrieb 14 einer ersten Zustellposition 11.1 zugestellt und dort eine Abstandsmessung entlang der Messstrecke 4 durchgeführt. Dabei wird kein Vorhandensein des Werkstücks 1 festgestellt. Daraufhin wird der Bearbeitungskopf 2 in Richtung der Messstrecke 4 einer zweiten Zustellposition 11.2 zugestellt, wobei die Zustellstrecke 12 zwischen der ersten Zustellposition 11.1 und der zweiten Zustellposition 11.2 kürzer als die Messstrecke 4 ist. Dadurch wird eine Kollision des Bearbeitungskopfs 2 mit einem möglicherweise am Ende der Messstrecke 4 vorhandenen Werkstück 1 vermieden. An der zweiten Zustellposition 11.2 wird wiederum eine Abstandsmessung durchgeführt. Wieder wird kein Vorhandensein des Werkstücks 1 entlang der Messstrecke 4 festgestellt und daraufhin der Bearbeitungskopf 2 einer dritten Zustellposition 11.3 zugestellt. Die Zustellstrecke 12 ist wiederum geringer als die Messstrecke 4. An der dritten Zustellposition 11.3 wird durch die dort erfolgende Abstandsmessung das Vorhandensein des Werkstücks 1 innerhalb der Messstrecke 4 festgestellt. Anhand der Information zur räumlichen Lage des Bearbeitungskopfes 2 sowie des erfassten Abstandswertes wird die so ermittelte Ist-Position 8 des Werkstücks 1 mit einer erwarteten Soll-Position 9 verglichen. Wird dabei festgestellt, dass Abweichungen zwischen Ist-Position 8 und Soll-Position 9 größer als zulässige Toleranzwerte sind, wird durch die Steuerung 10 der Antrieb 16 der Positionierungseinrichtung 15 angesteuert und die Positionierung des Werkstücks 1 geregelt so verändert, dass die zulässigen Toleranzwerte eingehalten werden.

Es ist auch möglich, den Bearbeitungskopf 2 ausgehend von der dritten Zustellposition 11.3 so zu verfahren, dass die zulässigen Toleranzwerte eingehalten werden.

Diese als Suchfahrt bezeichnete Vorgehensweise kann auch dazu verwendet werden, um das Vorhandensein von Werkstücken 1 oder Materialresten zu überprüfen, deren räumliche Lage nicht bekannt ist. Es kann auch das Vorhandensein von unvollständig abgetrennten Werkstücken 1 oder von am Werkstück 1 nach der Bearbeitung verbliebenen Materialresten überprüft werden, indem die vermuteten Positionen der Werkstücke 1 bzw. Materialreste mittels der Suchfahrt angefahren und überprüft werden.

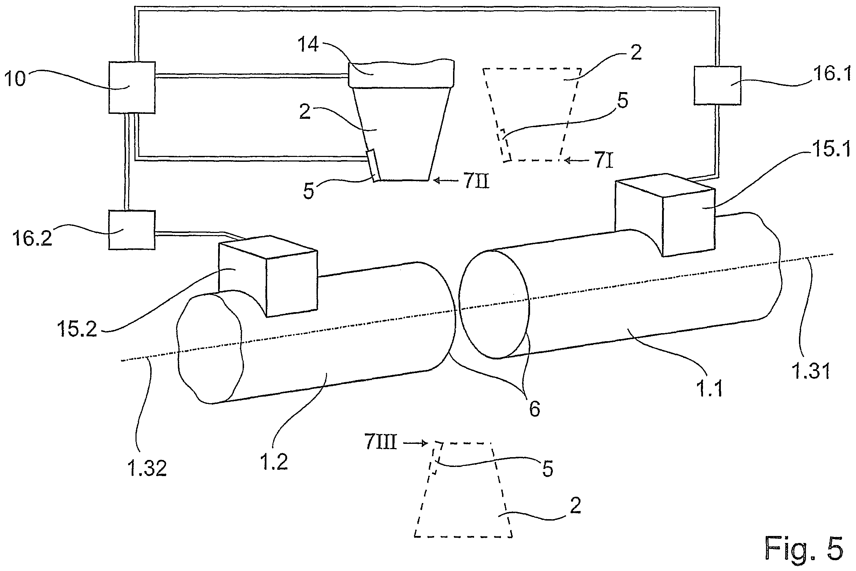

In Fig. 5 ist ein erstes Ausführungsbeispiel einer erfindungsgemäßen Vorrichtung mit einer ersten Positionierungseinrichtung 15.1 und einer zweiten Positionierungseinrichtung 15.2 gezeigt. In der ersten Positionierungseinrichtung 15.1 ist ein erstes Werkstück 1.1 positioniert; in der zweiten Positionierungseinrichtung 15.2 ist ein zweites Werkstück 1.2 positioniert. Der ersten Positionierungseinrichtung 15.1 ist ein erster Antrieb 16.1 und der zweiten Positionierungseinrichtung 15.2 ist ein zweiter Antrieb 16.2 zugeordnet. Beide Antriebe 16.1 und 16.2 stehen mit der Steuerung 10 in Verbindung. Die räumliche Lage des ersten Werkstücks 1.1 wird von der ersten Messposition 7I aus ermittelt und bei Bedarf wie oben ausgeführt korrigiert. Die räumliche Lage des zweiten Werkstücks 1.2 wird von der zweiten Messposition 7II aus ermittelt und im Bedarfsfall korrigiert. In Fig. 5 werden die erste Längsachse 1.31 des ersten Werkstücks 1.1 und die zweite Längsachse 1.32 des zweiten Werkstücks 1.2 zueinander so korrigiert, dass diese zusammenfallen. Außerdem werden die Stirnseiten der beiden Werkstücke 1.1 und 1.2 aneinandergesetzt. Die korrekte Ausrichtung der beiden Werkstücke 1.1 und 1.2 wird von einer dritten Messposition 7III aus überprüft. Ausgehend von der dritten Messposition 7III werden die beiden Werkstücke 1.1 und 1.2 mittels Laserstrahlung miteinander verschweißt. Die Schweißnaht wird entlang der Stoßnaht der beiden Werkstücke 1.1 und 1.2 erzeugt, die als Kontur 6 dient.

### Bezugszeichenliste

- 1: Werkstück
- 1.1: erstes Werkstück
- 1.2: zweites Werkstück
- 1.3: Längsachse
- 1.31: erste Längsachse
- 1.32: zweite Längsachse
- 2: Bearbeitungskopf
- 3: Bearbeitungsmittel
- 3.1: Strahlungsquelle
- 3.2: strahlformende Optik
- 4: Messstrecke
- 5: Sensor
- 6: Kontur
- 7: Messposition
- 7I: erste Messposition
- 7II: zweite Messposition
- 7III: dritte Messposition
- 8: Ist-Position
- 9: Soll-Position
- 10: Steuerung
- 11: Zustellposition
- 11.1: erste Zustellposition
- 11.2: zweite Zustellposition
- 11.3: dritte Zustellposition
- 12: Zustellstrecke
- 13: Referenzachse
- 14: Antrieb (des Bearbeitungskopfes 2)
- 15: Positionierungseinrichtung
- 15.1: erste Positionierungseinrichtung
- 15.2: zweite Positionierungseinrichtung
- 16: Antrieb (der Positionierungseinrichtung 15)
- 16.1: erster Antrieb
- 16.2: zweiter Antrieb
- 17: Positionserfassungsmittel
- 18: virtuelle Messachse

## Patentansprüche

1. Verfahren zur Detektion und zur Korrektur einer räumlichen Lage eines in einer Positionierungseinrichtung (15) gehaltenen nicht-rotationssymmetrischen Werkstücks (1) und zur Bearbeitung des Werkstücks (1) mit den Schritten:
A: Positionieren des Werkstücks (1) in der Positionierungseinrichtung (15),
B: Zustellen eines Bearbeitungskopfes (2), aufweisend mindestens einen Sensor (5) zur Abstandsmessung und Positionserfassungsmittel (17) zur Erfassung der aktuellen Position des Bearbeitungskopfes (2), zu mindestens einer Messposition (7),
C: berührungsfreies Erfassen einer Ist-Position (8) jeweils eines Messpunktes des positionierten Werkstücks (1) an mindestens zwei Messpositionen (7, 7I, 7II,
7III) unter Verwendung des Bearbeitungskopfes (2), wobei die mindestens zwei Messpunkte auf einer virtuellen Messachse (18) liegen, die auf einer Oberfläche des Werkstücks (1) verläuft, und aus den erfassten Ist Positionen (8) eine Winkellage der virtuellen Messachse (18) bezüglich einer virtuellen Referenzachse (13) ermittelt wird,
D: Vergleichen der erfassten Ist-Position (8) mit einer erwarteten Soll-Position (9) und Feststellen von Abweichungswerten zwischen der Ist-Position (8) und der Soll-Position (9),
E: Vergleichen der festgestellten Abweichungswerte mit einem zulässigen Toleranzwert, wobei die festgestellten Abweichungen die Abweichungen der Abstandswerte zwischen der Ist-Position (8) und der Soll-Position (9) und die Winkellage sind,
F: Zustellen des Bearbeitungskopfes (2) zu einer Kontur (6), entlang der das Werkstück (1) durch den Bearbeitungskopf (2) zu bearbeiten ist, dann, wenn die festgestellte Abweichung innerhalb des zulässigen Toleranzwertes liegt, wobei der Schritt des Zustellens des Bearbeitungskopfes (2) zu einer Kontur (6) einen weiteren Schritt des Führens des Bearbeitungskopfes (2) in einer Ebene um das Werkstück umfasst und das Werkstück entlang einer von dem Bearbeitungskopf überstrichenen Linie abtrennt, oder
G: Ausrichten von Bearbeitungskopf (2) und Werkstück (1) zueinander und zu der einen Kontur (6) derart, dass eine Abweichung der Ist-Position (8) nach dem Ausrichten innerhalb der zulässigen Toleranzwerte liegt.

2. Verfahren nach Anspruch 1, **dadurch gekennzeichnet, dass** das Ausrichten von Bearbeitungskopf (2) und Werkstück (1) zueinander und zu der einen Kontur (6) durch eine gesteuerte Lageänderung des Bearbeitungskopfes (2) erfolgt.

3. Verfahren nach Anspruch 1, **dadurch gekennzeichnet, dass** das Ausrichten von Bearbeitungskopf (2) und Werkstück (1) zueinander und zu der einen Kontur (6) durch eine gesteuerte Lageänderung des Werkstücks (1) erfolgt.

4. Verfahren nach Anspruch 1, **dadurch gekennzeichnet, dass** das Ausrichten von Bearbeitungskopf (2) und Werkstück (1) zueinander und zu der einen Kontur (6) durch eine gesteuerte Lageänderung des Bearbeitungskopfes (2) und des Werkstücks (1) erfolgt.

5. Verfahren nach einem der vorhergehenden Ansprüche, **dadurch gekennzeichnet, dass** der Bearbeitungskopf (2) schrittweise einer Zustellposition (11), die als Messposition (7) dient, zugestellt wird, indem der Bearbeitungskopf (2) einer Reihe aufeinanderfolgender Zustellpositionen (11, 11.1, 11.2, 11.3) zugestellt wird, an jeder Zustellposition (11, 11.1, 11.2, 11.3) durch eine Abstandsmessung das Vorhandensein des Werkstücks (1) innerhalb einer Messstrecke (4) untersucht wird und bei einem Nichtvorhandensein des Werkstücks (1) der Bearbeitungskopf (2) einer nächsten Zustellposition (11, 11.1, 11.2, 11.3) zugestellt wird, wobei die nächste Zustellposition (11, 11.1, 11.2, 11.3) in einer geringeren Entfernung von einer vorhergehenden Zustellposition (11, 11.1, 11.2, 11.3) gewählt ist, als die Länge der Messstrecke (4) der Abstandsmessung beträgt.

6. Verfahren nach einem der vorhergehenden Ansprüche, **dadurch gekennzeichnet, dass** nach erfolgter Bearbeitung des Werkstücks (1) durch den Bearbeitungskopf (2) erneut die Schritte B, C, D und E durchgeführt werden, um den Erfolg der Bearbeitung zu überprüfen.

## Claims

1. Method for detecting and correcting a spatial position of a non-rotationally symmetrical workpiece (1) held in a positioning device (15) and for machining the workpiece (1) with the steps of:
A: positioning the workpiece (1) in the positioning device (15),
B: infeeding a machining head (2), having at least one sensor (5) for distance measurement and position sensing means (17) for sensing the current position of the machining head (2), to at least one measuring position (7),
C: contactlessly sensing an actual position (8) of in each case a measuring point of the positioned workpiece (1) at at least two measuring positions (7, 71, 7II, 7III) by using the machining head (2), the at least two measuring points lying on a virtual measuring axis (18) which runs on a surface of the workpiece (1), and determining from the sensed actual positions (8) an angular position of the virtual measuring axis (18) with respect to a virtual reference axis (13),
D: comparing the sensed actual position (8) with an expected desired position (9) and ascertaining deviation values between the actual position (8) and the desired position (9),
E: comparing the ascertained deviation values with an admissible tolerance value, the ascertained deviations being the deviations of the distance values between the actual position (8) and the desired position (9) and the angular position,
F: infeeding the machining head (2) to a contour (6) along which the workpiece (1) is to be machined by the machining head (2) whenever the ascertained deviation lies within the admissible tolerance value, the step of infeeding the machining head (2) to a contour (6) comprising a further step of guiding the machining head (2) in a plane around the workpiece and cutting off the workpiece along a line that is passed over by the machining head, or
G: aligning the machining head (2) and the workpiece (1) in relation to one another and in relation to the one contour (6) in such a way that after the alignment a deviation of the actual position (8) lies within the admissible tolerance values.

2. Method according to Claim 1, **characterized in that** the alignment of the machining head (2) and the workpiece (1) in relation to one another and in relation to the one contour (6) takes place by a controlled change in the position of the machining head (2).

3. Method according to Claim 1, **characterized in that** the alignment of the machining head (2) and the workpiece (1) in relation to one another and in relation to the one contour (6) takes place by a controlled change in the position of the workpiece (1).

4. Method according to Claim 1, **characterized in that** the alignment of the machining head (2) and the workpiece (1) in relation to one another and in relation to the one contour (6) takes place by a controlled change in the position of the machining head (2) and the workpiece (1).

5. Method according to one of the preceding claims, **characterized in that** the machining head (2) is infed step by step to an infeeding position (11), which serves as a measuring position (7), **in that** the machining head (2) is infed to a series of successive infeeding positions (11, 11.1, 11.2, 11.3), at each infeeding position (11, 11.1, 11.2, 11.3) the presence of the workpiece (1) within a measuring section (4) is investigated by a distance measurement and, in the event of the workpiece (1) not being present, the machining head (2) is infed to a next infeeding position (11, 11.1, 11.2, 11.3), the next infeeding position (11, 11.1, 11.2, 11.3) being chosen at a smaller distance from a previous infeeding position (11, 11.1, 11.2, 11.3) than the length of the measuring section (4) of the distance measurement.

6. Method according to one of the preceding claims, **characterized in that**, once machining of the workpiece (1) by the machining head (2) has taken place, steps B, C, D and E are carried out once again in order to check the success of the machining.

## Revendications

1. Procédé de détection et de correction d'une position dans l'espace d'une pièce (1) n'ayant pas la symétrie de révolution maintenue dans un système de positionnement (15) et d'usinage de la pièce (1) comportant les étapes suivantes:
A: positionner la pièce (1) dans le système de positionnement (15),
B: approcher une tête d'usinage (2), présentant au moins un capteur (5) pour la mesure de distance et des moyens de détection de position (17) pour détecter la position actuelle de la tête d'usinage (2), d'au moins une position de mesure (7),
C: détecter sans contact une position réelle (8) chaque fois d'un point de mesure de la pièce positionnée (1) dans au moins deux positions de mesure (7, 7I, 7II, 7III) avec utilisation de la tête d'usinage (2), dans lequel lesdits au moins deux points de mesure sont situés sur un axe de mesure virtuel (18), qui s'étend sur une surface de la pièce (1), et à partir des positions réelles détectées (8) on détermine une position angulaire de l'axe de mesure virtuel (18) par rapport à un axe de référence virtuel (13),
D: comparer la position réelle détectée (8) à une position de consigne attendue (9) et constater des valeurs de déviation entre la position réelle (8) et la position de consigne (9),
E: comparer les valeurs de déviation constatées à une valeur de tolérance admissible, dans lequel les déviations constatées sont les déviations des valeurs de distance entre la position réelle (8) et la position de consigne (9) et la position angulaire,
F: approcher la tête d'usinage (2) d'un contour (6), le long duquel la pièce (1) doit être usinée par la tête d'usinage (2), lorsque la déviation constatée se situe à l'intérieur de la valeur de tolérance admissible,
dans lequel l'étape d'approche de la tête d'usinage (2) d'un contour (6) comprend une autre étape de guidage de la tête d'usinage (2) dans un plan autour de la pièce et sépare la pièce le long d'une ligne balayée par la tête d'usinage, ou
G: orienter la tête d'usinage (2) et la pièce (1) l'une par rapport à l'autre et par rapport audit un contour (6), de telle manière qu'une déviation de la position réelle (8) se situe après l'orientation à l'intérieur de la valeur de tolérance admissible.

2. Procédé selon la revendication 1, **caractérisé en ce que** l'on effectue l'orientation de la tête d'usinage (2) et de la pièce (1) l'une par rapport à l'autre et par rapport audit un contour (6) par un changement de position commandé de la tête d'usinage (2).

3. Procédé selon la revendication 1, **caractérisé en ce que** l'on effectue l'orientation de la tête d'usinage (2) et de la pièce (1) l'une par rapport à l'autre et par rapport audit un contour (6) par un changement de position commandé de la pièce (1).

4. Procédé selon la revendication 1, **caractérisé en ce que** l'on effectue l'orientation de la tête d'usinage (2) et de la pièce (1) l'une par rapport à l'autre et par rapport audit un contour (6) par un changement de position commandé de la tête d'usinage (2) et de la pièce (1).

5. Procédé selon l'une quelconque des revendications précédentes, **caractérisé en ce que** l'on approche la tête d'usinage (2) pas à pas d'une position d'approche (11), qui sert de position de mesure (7), **en ce que** l'on approche la tête d'usinage (2) d'une série de positions d'approche successives (11, 11.1, 11.2, 11.3), on contrôle à chaque position d'approche (11, 11.1, 11.2, 11.3) par une mesure de distance la présence de la pièce (1) à l'intérieur d'une zone de mesure (4) et, en cas d'absence de la pièce (1), on approche la tête d'usinage (2) d'une position d'approche suivante (11, 11.1, 11.2, 11.3), dans lequel la position d'approche suivante (11, 11.1, 11.2, 11.3) est choisie à une distance d'une position d'approche précédente (11, 11.1, 11.2, 11.3) plus courte que la longueur de la zone de mesure (4) de la mesure de distance.

6. Procédé selon l'une quelconque des revendications précédentes, **caractérisé en ce qu'**après l'exécution de l'usinage de la pièce (1) par la tête d'usinage (2), on effectue de nouveau les étapes B, C, D et E pour contrôler la bonne exécution de l'usinage.
